# EUROPÄISCHE PATENTSCHRIFT

(11) **EP 0 774 371 B1**
(45) Veröffentlichungstag und Bekanntmachung des Hinweises auf die Patenterteilung: **08.03.2000**
(21) Anmeldenummer: 96118431.4
(22) Anmeldetag: 16.11.1996
(51) Int. Cl.: B60J 7/06

(54) **Festelement zur Befestigung eines Faltverdecks**
Fastener element for foldable top
Elément de fixation pour capote pliante

(30) Priorität: 20.11.1995 DE 19543243
(43) Veröffentlichungstag der Anmeldung: 21.05.1997
(73) Patentinhaber: WEBASTO KAROSSERIESYSTEME GmbH, D-82131 Stockdorf (DE)
(72) Erfinder: Schüch, Siegmund, 81669 München (DE); Birndorfer, Robert, 82362 Weilheim (DE)
(74) Vertreter: Wiese, Gerhard

(56) Entgegenhaltungen:
- DE-C- 916 497

## Beschreibung

Die Erfindung bezieht sich auf ein Festelement zur Befestigung eines, dem wahlweisen Verschließen oder teilweisen Öffnen einer Dachöffnung an einem Fahrzeug dienenden Faltverdecks gemäß dem Oberbegriff des Patentanspruchs 1.

Faltdächer mit derartigen Festelementen sind beispielsweise aus der DE-PS 916 497 bekannt. Bei diesen sind an einem quer zur Öffnungsrichtung verlaufenden Querteil zu beiden Außenseiten Ausrundungen vorgesehen, durch welche sich das Faltdach an eine Dachöffnung anpaßt. Bekannte Festelemente sind aus einem Stück hergestellt, deshalb zur Anpassung an verschiedene Fahrzeugtypen mit unterschiedlichen Dachwölbungen und Dachöffnungsgrößen jeweils relativ große und entsprechend teuere Werkzeuge zur Formung der Festelemente hergestellt werden müssen.

Der vorliegenden Erfindung liegt die Aufgabe zugrunde, ein Festelement der eingangs bezeichneten Gattung zu schaffen, welches zu einem Einsatz bei verschiedenen Fahrzeugtypen und Dachwölbungen geeignet ist. Diese Aufgabe wird durch die im Patentanspruch 1 angegebenen Mittel gelöst. Vorteilhafte Ausgestaltungen sind den Unteransprüchen zu entnehmen.

Dadurch, daß das Querteil als Profilteil ausgebildet ist, an dem seitliche Aufnahmeöffnungen vorgesehen sind, in welche formgleiche Steckteile einführbar sind, die an separaten, die Abrundungen bildenden Abschlußteilen angeordnet sind, wird ein modularer Aufbau der Festelemente ermöglicht. Das Querteil als Profilteil kann dabei je nach Breite der Dachöffnung auf ein bestimmtes Maß abgelängt und mit einem an die jeweilige Kontur des Daches und der Dachöffnung angepaßten, relativ kleinen Abschlußteil in einfacher Weise verbunden werden. Es sind somit lediglich Werkzeuge nötig, um gegebenenfalls unterschiedliche Abschlußteile zu formen.

Eine besonders vorteilhafte Ausgestaltung der Erfindung sieht vor, daß das Querteil als Strangpreßprofil ausgebildet ist, welches besonders vorteilhaft aus einem Leichtmetall oder Leichtmetall-Legierung besteht.

An einem solchen Querteil ist vorzugsweise ein Profil zur Befestigung des Faltverdeckes ausgebildet. Ein solches Profil kann beispielsweise zur Aufnahme einer Schlaufe des Verdeckstoffes und eines in diese Schlaufe einschiebbaren Formteiles ausgebildet sein oder auch sich in Längsrichtung des Querteiles erstreckende Gewindeprofilrillen zur Aufnahme von das Faltverdeck fixierenden Schrauben aufweisen.

Es ist ferner vorteilhaft, wenn am Querteil ein Profil zur Befestigung eines Spanngurtes für das Faltverdeck angeordnet ist. Für ein derartiges Profil gilt analog das zuvor für die Fixierung des Faltverdeckes Gesagte.

Die Abschlußteile sind gemäß einer besonders vorteilhaften Ausgestaltung als Druckguß- oder Spritzgußteile ausgebildet. Hierdurch lassen sich besonders maßhaltige Steckteile produzieren, die ohne Nachbearbeitung in die entsprechenden Aufnahmeöffnungen des Querteiles einfügbar sind.

Vorteilhaft sind an derartigen Abschlußteilen Halterungen für sich längs des Faltverdeckes erstreckende Spannseile- oder -gurte angeordnet. Bei einer Herstellung der Abschlußteile im Druckguß- oder Spritzgußverfahren können diese Halterungen unmittelbar an den Abschlußteilen angeformt sein. Eine bisher übliche Befestigung zusätzlicher Halterungen durch Schweißen, Löten oder Kleben entfällt somit.

Die Aufnahmeöffnungen am Querteil und die Steckteile an den Abschlußteilen können so ausgelegt sein, daß die Steckteile mit einem Übermaß versehen sind und in die Aufnahmeöffnungen hineingepreßt werden. Statt einer solchen Preßverbindung kann für den Zusammenhalt des Querteiles mit den Abschlußteilen als vorteilhafte Alternative, die auch eine Demontage beider Teile erleichtert, vorgesehen sein, daß am Querteil und an den Steckteilen senkrecht zur Verbindungsrichtung wirksame Arretierungsmittel, wie beispielsweise Bohrungen und Schrauben, vorgesehen sind.

Nachfolgend ist ein Ausführungsbeispiel der Erfindung anhand der Zeichnungen beschrieben.
Es zeigt:
- Fig.1A: ein Fahrzeugdach mit einer Dachöffnung,
- Fig.1B: eine perspektivische Explosionsdarstellung der Versteifungselemente eines Faltverdeckes,
- Fig.1C: den zugehörigen Verdeckstoff des Faltverdecks,
- Fig. 2: eine perspektivische Darstellung eines Festelementes,
- Fig. 3: eine vergrößerte Darstellung des Verbindungsbereiches zwischen Querteil und einem Abschlußteil,
- Fig. 4: ein Faltverdeck von der Unterseite zur Verdeutlichung des Verlaufes der Spanngurte und
- Fig. 5: einen Querschnitt durch den vorderen Rand der Dachöffnung bei fertig montiertem Faltverdeck.

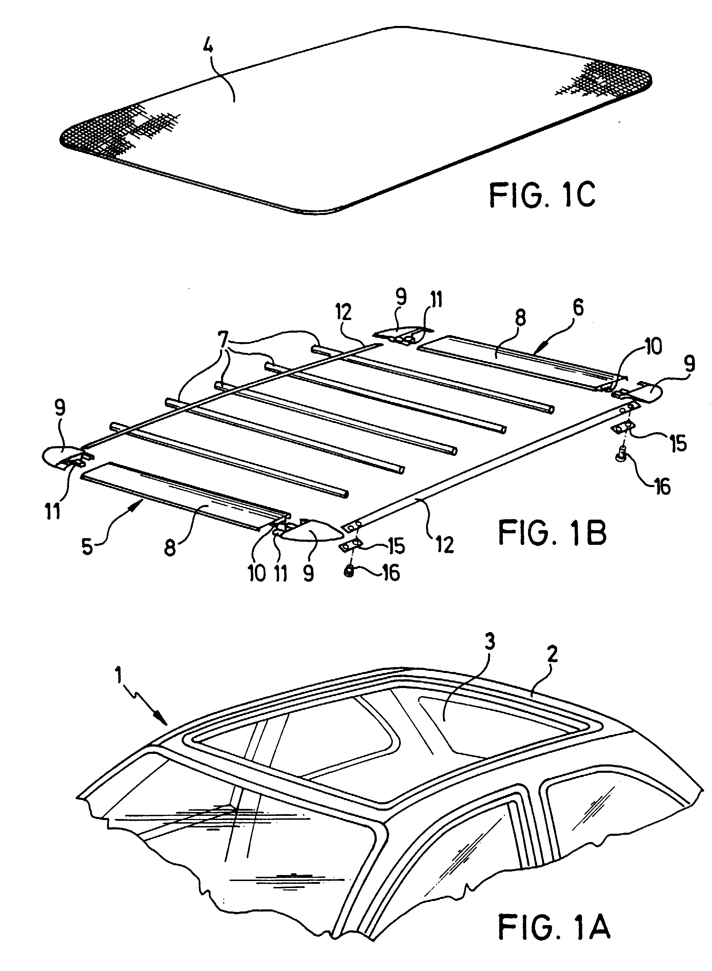

Ein Fahrzeug 1 ist mit einem Fahrzeugdach 2 versehen, welches eine Dachöffnung 3 aufweist, die mittels eines Faltverdeckes 4 wahlweise verschließbar oder wenigstens teilweise freilegbar ist. Zur Aussteifung und zur Ermöglichung der Öffnung- bzw. Schließbewegung ist der Verdeckstoff des Faltverdecks 4 mit einer in Fig. 1B verdeutlichten Unterkonstruktion ausgerüstet. Diese weist ein vorderes Festelement 5, ein hinteres Festelement 6 sowie mehrere zwischen diesen beiden Festelementen 5 bzw. 6 angeordnete, parallel dazu verlaufende Spriegel 7 auf.

Das vordere Festelement 5 und das hintere Festelement 6 bestehen jeweils aus einem quer zur Öffnungsrichtung der Faltverdeckes verlaufenden Querteil 8 und zwei seitlich mit diesem verbundenen Abschlußteilen 9, welche eine ausgerundete Form zur Anpassung an die Kontur der Dachöffnung aufweisen.

Um ein Faltdach unabhängig von der Kontur des Fahrzeuges und von Größe und Form der Dachöffnung kostengünstig und einfach herstellen zu können, sind die Querteile 8 und die Abschlußteile 9 durch eine Steckverbindung miteinander verbindbar. Zu diesem Zweck weisen die Querteile 8 zu beiden Stirnseiten Aufnahmeöffnungen 10 auf, in welche formgleiche Steckteile 11 der Abschlußteile 9 einschiebbar sind. Die Steckteile 11 sind vorteilhaft mit den Abschlußteilen 9 integriert, können jedoch alternativ dazu auch als separate Bauteile ausgebildet sein, die in die Abschlußteile 5 und in das Querteil 8 einsteckbar oder auf diese Teile aufsteckbar sind.

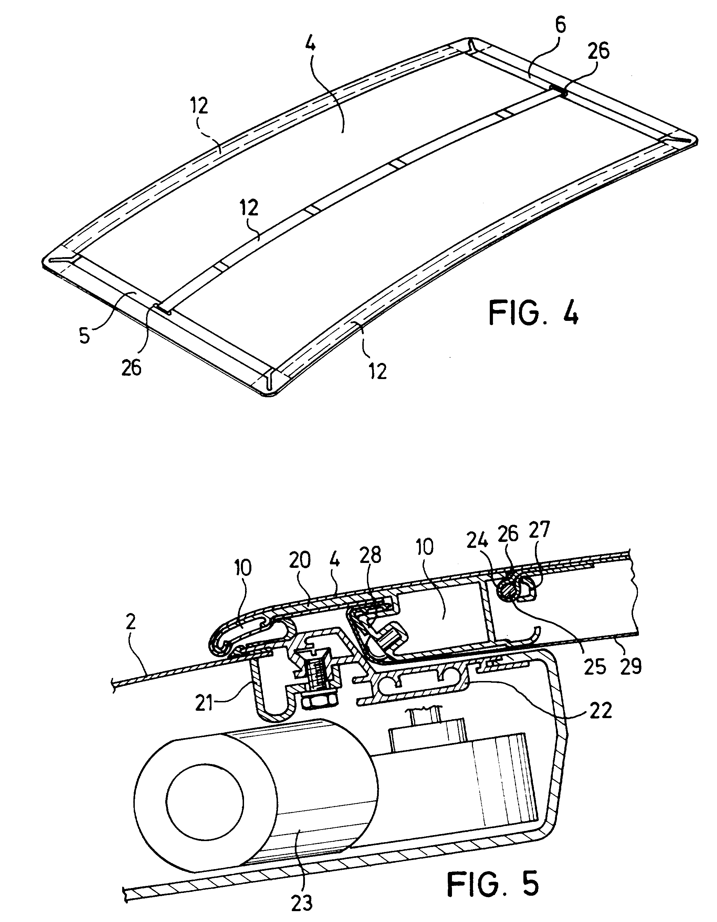

Die Abschlußteile 9 dienen ferner zur Befestigung von längs verlaufenden Spanngurten 12, die vorzugsweise als Textilbandgurte ausgebildet sind und für eine Verbindung der beiden Festelemente 5 bzw. 6 sorgen. Die Spanngurte 12 verlaufen in seitlich an der Unterseite des Verdeckstoffes angeordneten Taschen (siehe Fig. 4) und sorgen bei geschlossenem Verdeck für eine Spannung im Verdeckstoff, durch welche dieser auch bei starkem Fahrtwind sicher an das feste Fahrzeugdach 2 angepreßt wird. Je nach gewünschter Faltenbildung können auch einzelne oder alle der Spriegel 7 in Verbindung mit den Spanngurten 12 stehen.

Wie in Fig. 1B dargestellt, erfolgt die Verbindung der Abschlußteile 9 mit den Spanngurten 12 über Gewindebohrungen 14 in den Abschlußteilen 9, sowie eine von unten auf die Enden der Spanngurte 12 drückende Druckplatte 15 und beide durchdringende Schrauben 16. Sollte zusätzlich zu den seitlich verlaufenden Spanngurten 12 ein weiterer mittlerer Spanngurt 12 vorgesehen sein (Fig. 4), so ist für dessen Befestigung vorteilhafterweise am Querteil 8 in dessen Mitte ein Durchbruch 26 vorgesehen.

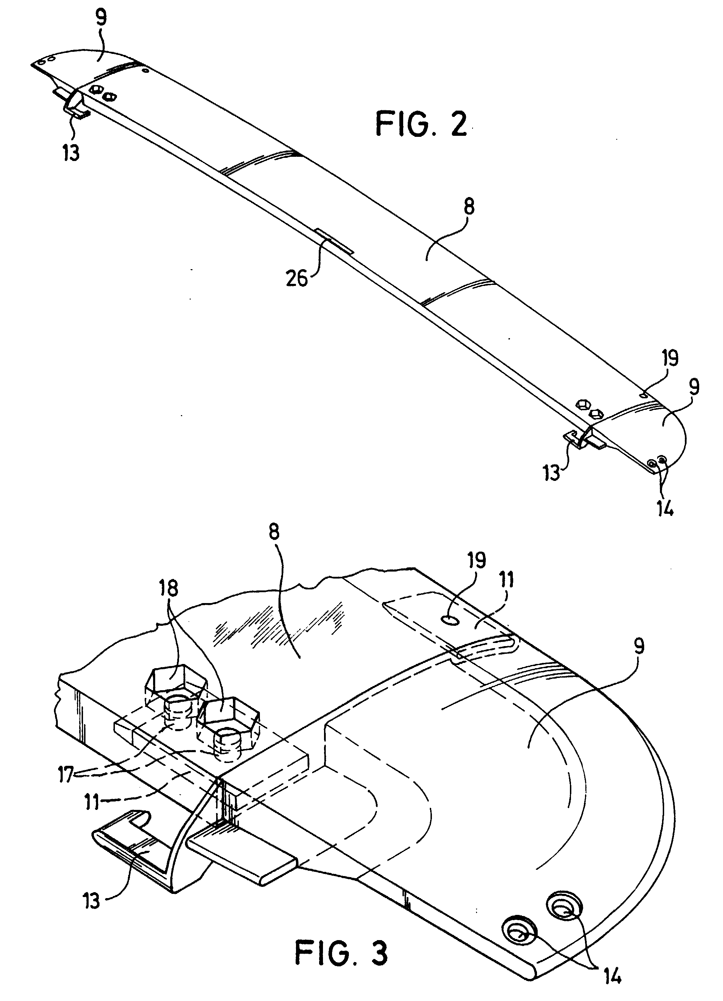

Wie in Fig. 2 verdeutlicht, können an den Abschlußteilen 9 ferner hakenförmige Halterungen 13 zur Befestigung von nicht dargestellten Spanngurten eines Himmels 29 vorgesehen sein.

Die Verbindung der Querteile 8 mit den Abschlußteilen 9 kann durch eine einfache Steckverbindung erfolgen, bei der beispielsweise die Steckteile 11 gegenüber den Aufnahmeöffnungen 10 ein entsprechendes Übermaß aufweisen, sodaß eine haltbare Preßverbindung geschaffen wird. Vorzugweise weisen die Querteile 8 und die Steckteile 11 an den Abschlußteilen 9 jedoch senkrecht zur Steckrichtung verlaufende Haltemittel auf, die für einen sicheren Zusammenhalt sorgen. Beispielhaft hierfür sind in den Steckteilen 11 sowie im Querteil 8 senkrecht verlaufende Bohrungen 17 vorgesehen, die nach Einstecken der Steckteile 11 in die Aufnahmeöffnungen 10 bündig zueinander liegen und die von einer senkrecht verlaufenden Schraube miteinander verbunden werden. Um eine Versenkung der Schraubenköpfe zu ermöglichen, sodaß ein glattflächiges Erscheinungsbild des Faltverdeckes 4 entsteht, ist es vorteilhaft, wenn am Querteil 8 Schraubenkopf-Aufnahmen 18 zur Aufnahme der entsprechenden Schraubenköpfe eingeformt sind. Eine entsprechende Bohrung 19 ist auch zur Verbindung des in Fig. 3 außen liegenden Steckteils 11 mit dem Querelement 8 vorgesehen. Außer einer Preß- oder Schraubverbindung kommen als Haltemittel für eine Verbindung der Querteile 8 mit den Abschlußteilen 9 selbstverständlich auch andere mechanische Verrastungen, wie beispielsweise Clipverbindungen, Klebe- oder Nietverbindungen in Betracht.

Wesentlich ist, daß das vorzugsweise als Strangpreßprofil aus ein am Leichtmetall oder einer Leichtmetall-Legierung gebildete Querteil 8 als Massenware herstellbar und je nach verwendetem Fahrzeugdach auf eine bestimmte Länge abgeschnitten und gebogen werden kann. An den entsprechenden Fahrzeugtyp angepaßt werden muß dann lediglich die Biegekontur des Strangprofiles, während die Steckverbindungen immer dieselbe Form aufweisen, sodaß für die Abschlußteile 9 modular zusammengesetzte Kunststoff-Spritzformen verwendbar sind. Ein geeignetes Strangpreßprofil zur Bildung eines Querteiles 8 ist in Fig. 5 verdeutlicht. Das Profil weist an der Vorderkante ein Profilteil 20 zur Befestigung des Faltverdeckes 4 auf. In den nahe der Hinterkante vorgesehenen Durchbruch 26 wird eine Schlaufe 24 des mittleren Spanngurtes 12 eingefädelt und mittels eines Bolzens 25, der von einem Profil 27 an der Hinterkante gehalten wird, fixiert. An dem Strangpreßprofil des Querteiles 8 kann ferner ein weiteres Profil 28 zur Befestigung eines an der Unterseite des Faltverdeckes angeordneten Himmels 29 vorgesehen sein.

Fig. 5 verdeutlicht ferner weitere Bauteile zur Halterung und Betätigung des Faltverdeckes 4. Das Fahrzeugdach 2 ist im Bereich der Kante der Dachöffnung 3 durch einen Verstärkungsrahmen 21 verstärkt. An diesem ist ein ebenfalls als Strangpreßprofil ausgebildeter Dachrahmen 22 befestigt, welcher Führungskanäle für Antriebskabel aufweist, welche mittels eines mit 23 bezeichneten elektrischen Antriebes antreibbar sind, und welche in Verbindung mit nicht dargestellten, in seitlichen Führungsschienen verlaufenden Gleitelementen stehen, die je nach Öffnungscharakteristik des Faltdaches mit dem vorderen Festelement 5 und/oder dem hinteren Festelement 6 in Verbindung stehen.

### Bezugszeichenliste

- 1: Fahrzeug
- 2: Fahrzeugdach
- 3: Dachöffnung
- 4: Faltverdeck
- 5: (vorderes) Festelement
- 6: (hinteres) Festelement
- 7: Spriegel
- 8: Querteil
- 9: Abschlußteil
- 10: Aufnahmeöffnung
- 11: Steckteil
- 12: Spanngurt
- 13: Halterung
- 14: Bohrung
- 15: Druckplatte
- 16: Schraube
- 17: Bohrung
- 18: Schraubenkopf-Aufnahme
- 19: Bohrung
- 20: Profil (zur Befestigung von 4)
- 21: Verstärkungsrahmen
- 22: Dachrahmen
- 23: (elektrischer) Antrieb
- 24: Schlaufe (an 12)
- 25: Bolzen
- 26: Durchbruch
- 27: Profil (zur Befestigung von 12)
- 28: Profil
- 29: Himmel

## Patentansprüche

1. Festelement (5 bzw.6) zur Befestigung eines dem wahlweisen Verschließen oder wenigstens teilweisen Öffnen einer Dachöffnung (3) an einem Fahrzeug (1) dienenden Faltverdeckes (4), das ein quer zur Öffnungsrichtung verlaufendes Querteil (8) aufweist, welches an beiden Ecken zur Anpassung an die Dachöffnung (3) mit einer Abrundung versehen ist, **dadurch gekennzeichnet**, daß das Querteil (8) als Profilteil ausgebildet ist, an dem seitliche Aufnahmeöffnungen (10) für daran angepaßte Steckteile (11) vorgesehen sind, welche ihrerseits an separaten, die Abrundungen bildenden Abschlußteilen (9) angeordnet sind.

2. Festelement nach Anspruch 1, **dadurch gekennzeichnet**, daß das Querteil (8) als Strangpreßprofil ausgebildet ist.

3. Festelement nach Anspruch 2, **dadurch gekennzeichnet**, daß das Querteil (8) aus einem Leichtmetall oder einer Leichtmetall-Legierung gebildet ist.

4. Festelement nach einem der vorhergehenden Ansprüche, **dadurch gekennzeichnet**, daß am Querteil (8) ein Profil (20) zur Befestigung des Faltverdecks (4) ausgebildet ist.

5. Festelement nach einem der vorhergehenden Ansprüche, **dadurch gekennzeichnet**, daß am Querteil (8) ein Profil (27) zur Befestigung eines Spanngurts (12) für das Faltverdeck (4) angeordnet ist.

6. Festelement nach Anspruch 1, **dadurch gekennzeichnet**, daß die Abschlußteile (9) als Druckguß- oder Spritzgußteile ausgebildet sind.

7. Festelement nach Anspruch 6, **dadurch gekennzeichnet**, daß an den Abschlußteilen (9) Halterungen für sich längs des Faltverdecks (4) erstreckende Spanngurte (12) angeordnet sind.

8. Festelement nach Anspruch 7, **dadurch gekennzeichnet**, daß die Halterungen unmittelbar an den Abschlußteilen (9) angeformt sind.

9. Festelement nach einem der vorhergehenden Ansprüche, **dadurch gekennzeichnet**, daß am Querteil (8) und an den Steckteilen (11) der Abschlußteile (9) senkrecht zur Verbindungsrichtung wirksame Arretierungsmittel vorgesehen sind.

## Claims

1. Rigid element (5 and/or 6) for the fitment of a folding roof (4) which serves optionally to close or at least partially open a roof aperture (3) on a vehicle (1) and which comprises, extending crosswise to the direction of opening, a transverse part (8) which is rounded at both corners in order to adapt to the roof aperture (3), characterised in that the transverse part (8) is constructed as a profiled part on which there are lateral apertures (10) to receive matching push-in parts (11) which are in turn disposed on separate closure end parts (9) which form the rounded portions.

2. Rigid element according to Claim 1, characterised in that the transverse part (8) is constructed as an extruded moulding.

3. Rigid element according to Claim 2, characterised in that the transverse part (8) is formed from a light metal or light metal alloy.

4. Rigid element according to one of the preceding Claims, characterised in that a profiled part (20) for fixing the folding roof (4) is constructed on the transverse part (8).

5. Rigid element according to one of the preceding Claims, characterised in that a profiled member (27) for fixing a tensioning strap (12) for the folding roof (4) is disposed on the transverse part (8).

6. Rigid element according to Claim 1, characterised in that the end parts (9) are constructed as pressure cast or injection moulded parts.

7. Rigid element according to Claim 6, characterised in that there are on the end parts (9) mountings for tensioning straps (12) which extend lengthwise of the folding roof (4).

8. Rigid element according to Claim 7, characterised in that the mountings are directly and integrally moulded on the end parts (9).

9. Rigid element according to one of the preceding Claims, characterised in that locking means which take effect at right-angles to the direction of connection are provided on the transverse part (8) and on the push-in parts (11) of the end parts (9).

## Revendications

1. Elément rigide (5 ou 6) pour fixer un toit pliant (4) servant au choix à fermer ou à ouvrir au moins en partie une ouverture de toit (3) d'un véhicule automobile (1), qui comporte une pièce transversale (8) perpendiculaire à la direction d'ouverture présentant, sur deux angles, un arrondi d'adaptation à l'ouverture de toit (3),
caractérisé en ce que
la pièce transversale (8) est un élément profilé sur lequel sont prévus des orifices de réception (10) latéraux pour pièces à fiches (11) qui leur sont adaptées, et qui sont elles-mêmes portées par des pièces d'extrémité (9) présentant les arrondis.

2. Elément rigide selon la revendication 1,
caractérisé en ce que
la pièce transversale (8) est un profilé étiré à la presse.

3. Elément rigide selon la revendication 2,
caractérisé en ce que
la pièce transversale (8) est en métal léger ou en alliage de métal léger.

4. Elément rigide selon une des revendications précédentes,
caractérisé en ce que
la pièce transversale (8) comporte un profilé (20) servant à fixer le toit pliant (4).

5. Elément rigide selon une des revendications précédentes, caractérisé en ce que
sur la pièce transversale (8) est monté un profilé (27) servant à fixer une sangle de tension (12) du toit pliant (4) .

6. Elément rigide selon la revendication 1,
caractérisé en ce que
les pièces d'extrémité (9) sont réalisées par coulée sous pression ou par injection.

7. Elément rigide selon la revendication 6,
caractérisé en ce que
sur les pièces d'extrémité (9) sont montés des organes de maintien de sangles dé tension (12) s'étendant le long du toit pliant (4) .

8. Elément rigide selon la revendication 7,
caractérisé en ce que
les organes de maintien sont moulés directement sur les pièces d'extrémité (9) .

9. Elément rigide selon une des revendications précédentes,
caractérisé en ce que
sur la pièce transversale (8) et sur les pièces à fiches (11) des pièces d'extrémité (9), on prévoit des organes d'arrêt agissant perpendiculairement à la direction de liaison.
